# EUROPEAN PATENT SPECIFICATION

(11) **EP 3 424 804 B1**
(45) Date of publication and mention of the grant of the patent: **11.03.2020**
(21) Application number: 17425069.6
(22) Date of filing: 04.07.2017
(51) Int. Cl.: B62D 21/15, B62D 9/00, B60R 21/00, B62D 25/08

(54) **MOTOR VEHICLE PROVIDED WITH A SAFETY DEVICE TO TURN A FRONT WHEEL TRANSVERSELY TO THE TRAVEL DIRECTION DURING A FRONTAL COLLISION**
KRAFTFAHRZEUG MIT EINER SICHERHEITSVORRICHTUNG ZUM DREHEN EINES VORDERRADES QUER ZUR FAHRTRICHTUNG BEI EINER FRONTKOLLISION
VÉHICULE AUTOMOBILE POURVU D'UN DISPOSITIF DE SÉCURITÉ POUR FAIRE TOURNER UNE ROUE AVANT TRANSVERSALEMENT À LA DIRECTION DE DÉPLACEMENT LORS D'UN CHOC FRONTAL

(43) Date of publication of application: 09.01.2019
(73) Proprietor: FCA Italy S.p.A., 10135 Torino (IT)
(72) Inventor: STOENESCU, Bogdan, 10135 Torino (IT); LOMBARDI, Daniele, 10135 Torino (IT); DEL NERO, Gianfranco, 10135 Torino (IT)
(74) Representative: Lovino, Paolo

(56) References cited:
- US-A1- 2001 024 053
- US-A1- 2015 000 995

## Description

The present invention relates to a motor vehicle provided with a safety device to turn a front wheel transversely to the travel direction during a frontal collision. Safety devices with this function are used for the purpose of increasing the level of safety of the occupants of the vehicle passenger compartment, especially in the event of a collision with small overlap between the motor vehicle and the struck obstacle.

As is known, motor vehicles have a load-bearing front frame structure, housed inside the front engine compartment and designed to achieve an adequate degree of safety, especially for the occupants of the passenger compartment, in the event of accidents involving a frontal collision. Said frame structure is generally provided with a pair of side members, connected at their front ends to a bumper and having collapsible portions in order to absorb energy due to collisions at relatively high speeds. Furthermore, said frame structure has two lower struts, arranged below said side members. In general, the rear ends of the two lower struts are connected by means of a cross member, which supports the front suspensions and the powertrain (defined by the vehicle engine and gearbox).

In the event of a frontal collision with an obstacle at approximately the centreline of the motor vehicle, said collapsible portions make it possible to achieve a very high level of safety inside the passenger compartment. On the other hand, in the event of an offset frontal collision i.e., when the impact is offset with respect to the longitudinal centreline, and only involves one front corner of the vehicle, additional safety measures must be implemented in order to meet the safety regulations imposed by law. In particular, said regulations require so-called small overlap crash tests to be performed, i.e., where only a small portion (for example 25%) of the motor vehicle makes contact with the obstacle during the collision. In these cases, the forces generated by the impact are only discharged on one side of the vehicle, but the collapsible portions are not sufficient to absorb the impact energy, so that the passenger compartment is also subject to deformation, which should instead be avoided to guarantee the safety of the driver and/or passengers.

As mentioned above, solutions are known in which, during an accident, the front wheel on the impacted side is swerved so as to be turned transversely to the travel direction. In this way, swerving the wheel tends to alter the travel direction of the vehicle so that it moves away from the obstacle against which it has crashed.

Such solutions generally comprise an arm that protrudes laterally from one of said lower struts, and is arranged in a position close to the front bumper, so that it is in front of a corresponding front wheel: during the impact, said arm is pushed backwards, i.e., towards the front wheel, by a lateral end of the bumper. In this way, the protruding arm rotates about a substantially vertical axis and impacts against said wheel in a direction that is inclined with respect to the longitudinal travel direction of the motor vehicle, thus causing the wheel to swerve. In particular, the protruding arm has a relatively pointed portion that pierces the tyre of the wheel, comes into contact with the rim of the wheel and, as it rotates, forces the wheel to move in the desired direction. For example, the protruding arm comprises a plate which, during the impact, is plastically deformed and thus defines a virtual hinge in order to be able to rotate.

The known solutions of the type described above may be ineffective in front-wheel drive vehicles, in which the powertrain is arranged in a transverse configuration and the front wheels are arranged, along the longitudinal travel direction, in an area that is imposed by the position of the gearbox of the powertrain and is thus relatively far from the front bumper of the motor vehicle.

In order to guarantee relatively fast response times, the safety device should actually be installed so that it is close to the bumper, but because of its distance from the front wheel the safety device cannot be used effectively to make said wheel swerve.

US2015000995 A1 is representing the preamble of claim 1 and discloses a rod having a pointed end. Such rod is coupled to a mounting bracket, in turn coupled to a bumper beam, that transfers loads to the mounting bracket. A guide bracket is provided, with a guide portion that extends transversely with respect to the vehicle and has an elongated slot engaged by the rod, so as to prevent vertical movement of the rod.

The need is therefore felt for an adequate configuration and/or conformation of the safety device, so that it can also be made to operate correctly when installed in front-wheel drive vehicles with a transverse engine.

The purpose of the present invention is to provide a motor vehicle provided with a safety device to turn a front wheel transversely to the travel direction during a frontal collision, which satisfies the above need in a simple and economical manner.

According to the present invention, there is provided a motor vehicle provided with a safety device to turn a front wheel transversely to the travel direction during a frontal collision, as disclosed in claim 1.

In order to better understand the present invention, a non-limiting preferred embodiment thereof will now be described by way of example with reference to the accompanying drawings, in which:
- Figure 1 is a perspective and partial view of a front frame structure that is part of a preferred embodiment of the motor vehicle provided with a safety device to turn a front wheel transversely to the travel direction during a frontal collision, according to the present invention;
- Figure 2 is a simplified plan view on an enlarged scale of a detail of the safety device of the motor vehicle of Figure 1, during an initial stage of a frontal collision with an obstacle;
- Figures 3, 4 and 5 are simplified views of respective sections obtained along the section planes III-III, IV-IV and V-V of Figure 2; and
- Figures 6 to 8 are the same as Figure 2 and illustrate, on a reduced scale, a sequence of steps in the operation of the safety device during the frontal collision.

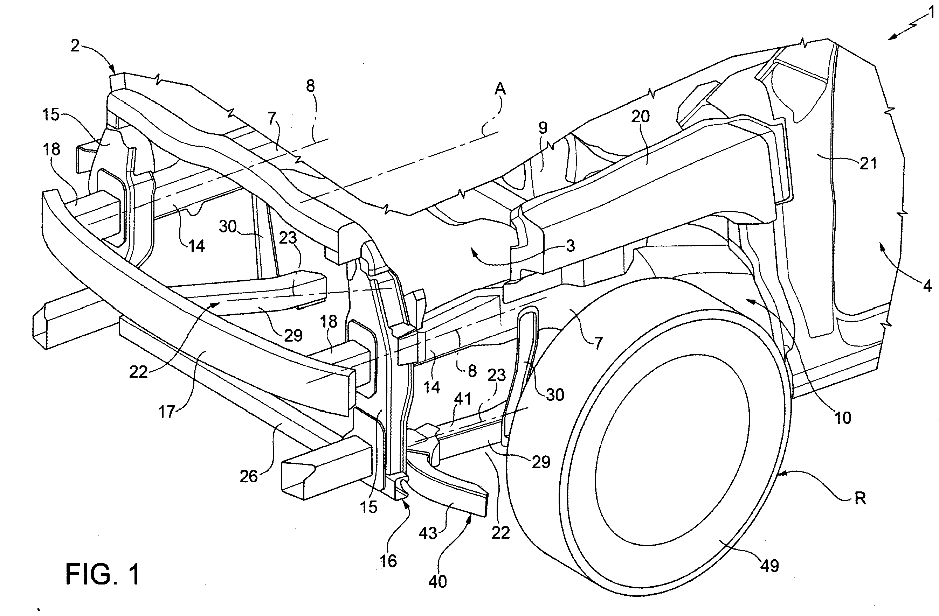

In Figure 1, reference number 1 indicates a motor vehicle as a whole. In particular, Figure 1 is a partial and simplified view of a load-bearing front frame structure 2 of the motor vehicle 1, which defines an engine compartment 3 and is arranged in front of a lower portion of a passenger compartment 4 (partially illustrated) of the motor vehicle 1.

The frame structure 2 comprises two front side members 7, which are arranged along the sides of the engine compartment 3, are substantially mutually symmetrical with respect to a longitudinal vertical centreline plane and extend along respective axes 8, which are substantially parallel to a longitudinal travel direction A of the motor vehicle 1.

In particular, the side members 7 protrude forward from a wall 9 (partially illustrated), commonly referred to as the "firewall", which delimits the front of a lower portion of the passenger compartment 4, and are arranged, in a horizontal direction, alongside respective compartments 10 (only one of which is visible in Figure 1) provided to house the front wheels R of the motor vehicle 1.

The front ends of the side members 7 are denoted by reference number 14 and are directly or indirectly connected to respective shaped plates 15, which are substantially vertical, are normally called vertical links and define the side uprights of a structure 16 which is ring-shaped so as to support and surround a heat exchange unit (not illustrated).

The structure 16 also supports a front bumper, of which only a rigid cross member 17 is illustrated. In particular, the lateral ends of the cross member 17 are fixed to the plates 15 by means of respective box-shaped elements 18, which are aligned with the side members 7 along the axes 8.

The frame structure 2 further comprises a pair of upper struts 20 (only one of which is visible in Figure 1). The struts 20 are arranged, respectively, above the compartments 10, in mutually symmetrical positions with respect to said vertical centreline plane, and protrude forward from respective front uprights 21 which support the front side doors (not illustrated) of the motor vehicle 1.

The frame structure 2 further comprises two lower struts 22, which are arranged below the side members 7 and extend along respective straight or curved axes 23, are inclined from the bottom upwards when observed from the side and, preferably, are divergent (i.e., inclined from the inside towards the outside) when observed in the plan view, considering the direction A as the forward direction.

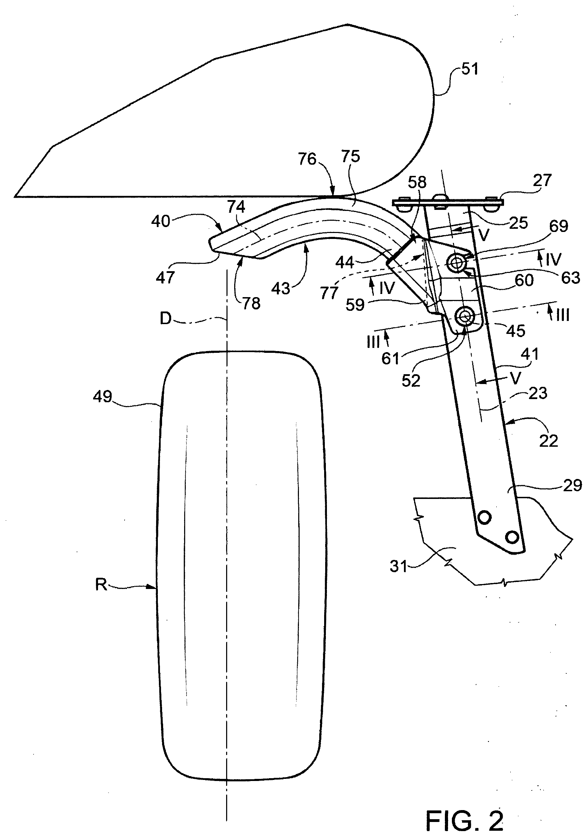

Preferably, the struts 22 are defined by tubes, for example with quadrangular section. With reference to Figure 2, the struts 22 end at the front with respective portions 25, which are fixed to the structure 16 in a known way that is not described in detail here. For example, the portions 25 are fixed to a lower cross member 26 of the structure 16 (visible in Figure 1) by means of respective brackets or flanges 27.

The struts 22 comprise respective rear portions 29 which are connected, respectively, to the side members 7 by means of respective arms 30 (Figure 1) and are connected to one another by means of a cross member 31 (partially illustrated in Figure 2). The cross member 31 supports, in an intermediate area thereof, a powertrain (not illustrated) and, at the sides of the motor vehicle 1, the two front wheels R, by means of respective suspensions which are not illustrated. For the purposes of the present invention, the specific configuration of the suspension and thus the configuration and arrangement of the elements which join the wheels R to the frame structure 2 may be of any kind, and for that reason are not illustrated here.

As shown in Figures 1 and 2, according to one aspect of the present invention, the motor vehicle 1 comprises a safety device 40 borne by an intermediate portion 41 of a respective strut 22. The device 40 is arranged in front of one of the wheels R, in particular the front left wheel of the motor vehicle 1, i.e., on the driver's side of lefthand drive motor vehicles. In right-hand drive motor vehicles, the device 40 is preferably installed on the right side. In any case, the device 40 may be installed on both the right side and on the left side of the motor vehicle 1.

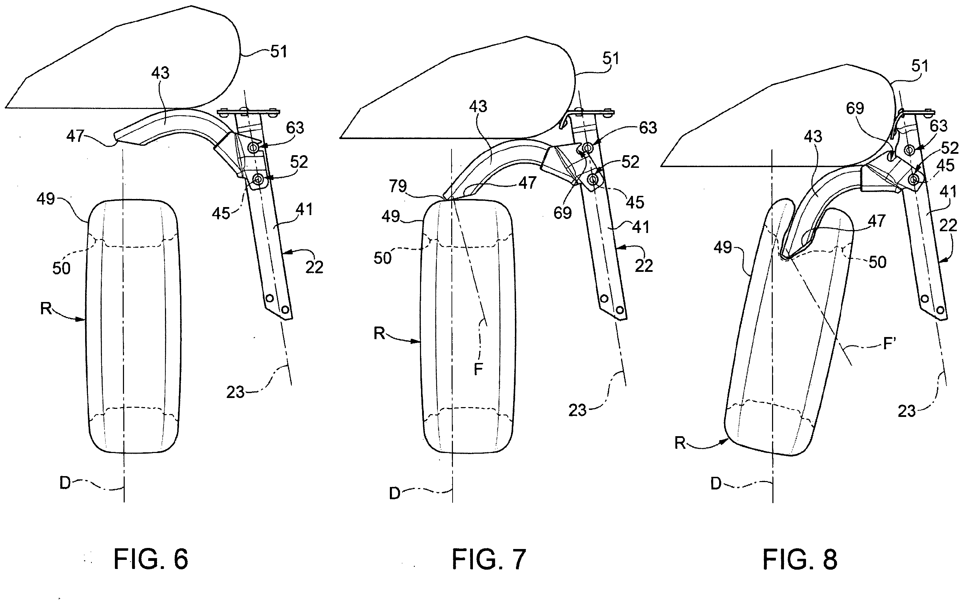

With reference to Figure 2, the device 40 comprises an arm 43, which protrudes laterally outwards from the portion 41 of the strut 22 and has an end 44 which is coupled to the portion 41 so as to allow the arm 43 to rotate about an axis 45. The axis 45 is transversal to the axis 23 of the corresponding strut 22 and is substantially vertical. The arm 43 is able to rotate towards the wheel R (i.e., in an anti-clockwise direction in Figure 2) starting from an inactive condition, in which a free end 47 of the arm 43, opposite to the end 44, is aligned with the wheel R along a direction D parallel to the direction A and is spaced along said direction D from the wheel R. As can be seen in Figures 7 and 8, during the rotation the end 47 impacts first against a tyre 49 and then against a rim 50 (illustrated by the dashed line) of the wheel R, along directions of impact F and F' which are inclined with respect to the direction D, so as to cause the wheel R to swerve and place the wheel R transversely to the direction A in the event of a frontal collision of the motor vehicle 1 with an obstacle 51 (schematically illustrated) with a small overlap (i.e., where only a small portion, for example less than 25%, of the vehicle hits the obstacle during the impact) . In other words, the front part of the wheel R moves closer to the corresponding side member 7 and to the corresponding strut 22.

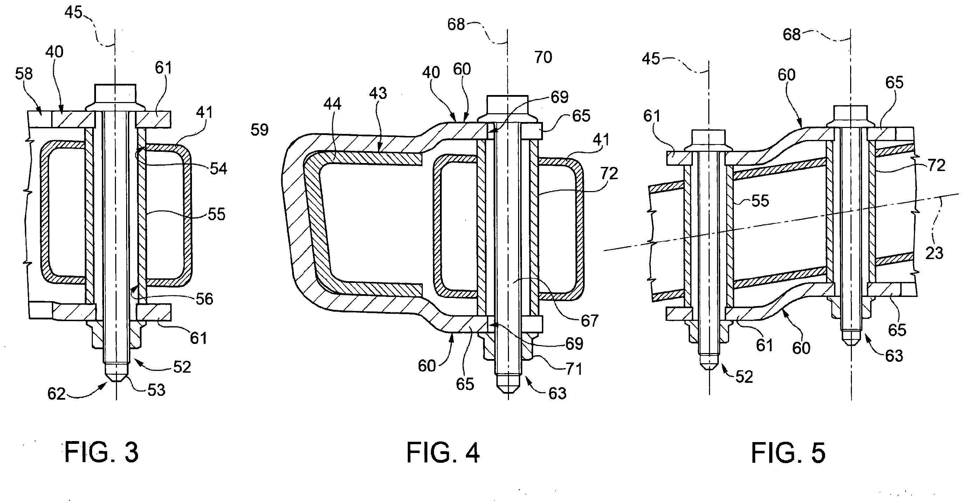

According to a preferred embodiment of the present invention, as shown in Figure 3, the rotation axis 45 is defined by a hinge 52 comprising a hinge pin 53. In particular, the portion 41 has a passage 54 which extends along the axis 45 and is engaged by a bush 55, which is fixed to the portion 41, for example by means of welding, protrudes above and below the portion 41 and defines a hinge seat 56 coaxially engaged by the hinge pin 53.

Preferably, as can be seen in Figures 2 and 4, the device 40 comprises a bracket 58 which joins the hinge pin 53 to the end 44 of the arm 43. The bracket 58 is fixed to the arm 43, for example by means of welding, and preferably has a C-shaped cross section so as to house the end 44. More in detail, the bracket 58 comprises: a portion 59 that is C-shaped to complement the external profile of the end 44, so as to come into contact with the end 44 without any clearance in the horizontal and vertical direction; and two tongues 60, which protrude from the portion 59 so as to be arranged above and, respectively, below the portion 41 and end with respective rear portions 61 (Figures 2 and 3) coupled to the hinge pin 53. In the specific case, as shown in Figure 3, the hinge pin 53 is defined by the shank of a bolt 62, tightened so as to maintain the portions 61 in sliding contact against the axial ends of the bush 55.

Advantageously, with reference to Figure 4, the device 40 comprises a retaining member 63, which is borne by the portion 41 and holds the arm 43 in the inactive condition during the normal travelling conditions of the motor vehicle 1, in addition to any friction that is present at the hinge 52. The retaining force exerted in the inactive condition is determined at the design stage so that it can be overcome in the event of a frontal collision to allow the arm 43 to rotate.

Specifically, the retaining member 63 is defined by a bolt and comprises a shank 67 which has an axis 68 that is parallel to and spaced from the rotation axis 45. The shank 67 releasably engages a recess 69 formed in front portions 65 of the tongues 60. In the plan view (Figure 1), the portions 65 are C-shaped so as to have respective lateral openings defining an entrance of the recesses 69. The radial dimension of the recess 69 with respect to the axis 68 is greater than the radius of the shank 67, so as to allow the recesses 69 to disengage from the shank 67 of the retaining member 63 during the rotation of the arm 43 (Figure 7).

Again with reference to Figure 4, the retaining member 63 further comprises a head 70 and a nut 71, which are arranged on axially opposite sides of the bracket 58 and are axially clamped against the edges of the recess 69. In particular, thanks to this clamping, the portions 65 are, in turn, clamped against the axial ends of a bush 72 which coaxially houses the shank 67, is fixed to the portion 41, for example by means of welding, and crosses the portion 41 so as to protrude axially above and below.

Therefore, in the embodiment that is illustrated, the retaining force to hold the arm 43 in the inactive position is defined by the friction force acting on the tongues 60 of the bracket 58.

With reference to Figure 2, according to a preferred aspect of the present invention, when the arm 43 is arranged in the inactive condition, the end 47 is arranged further forward than the rotation axis 45, longitudinally along the direction A. In particular, the rotation axis 45 is arranged in an intermediate longitudinal position between the end 47 and the wheel R.

According to a further preferred embodiment of the present invention, the arm 43 extends along an axis 74 which lies in a plane orthogonal to the axis 45 and is curved, for example in the shape of an arc of a circle or a banana. Therefore, the arm 43 substantially defines a hook or a grapnel. The axis 74 has the concavity facing the wheel R and the convexity facing forward when the arm 43 is in the inactive condition.

Therefore, the arm 43 comprises a curved portion 75 which is in an intermediate position between the ends 44 and 47 and defines a front contact area 76. Therefore, in the inactive position, the front contact area 76 is arranged in an intermediate position between the axis 45 and the end 47, in a horizontal direction orthogonal to the direction A, whereas in the direction D it is the area that is further forward than the other portions of the device 40, so that it is the first to be affected by the small overlap frontal collision with the obstacle 51. In particular, in the inactive condition, the front contact area 76 is arranged longitudinally in the same position as the portions 25 and the flange 27.

Preferably, in the horizontal direction orthogonal to the direction A, in the inactive position the end 47 is the laterally outermost one with respect to the other portions of the device 40. Moreover, in particular, the end 47 is arranged longitudinally in an intermediate position between the front contact area 76 and the rotation axis 45.

Preferably, the arm 43 is defined by a box-shaped element, so that the portion 75 has a closed cross section (when cut with section planes orthogonal to the axis 74). Even more preferably, the ends 44 and 47 have a C-shaped cross section, in that they are defined by respective cuts along plane faces 77 and 78, substantially parallel to the axis 45, so as to prevent interference between the end 44 and the portion 41 in the inactive condition and so as to give the end 47 a pointed shape which facilitates the insertion into the tyre 49 during the rotation about the axis 45. More in general, the configuration of the end 47 and its position in the inactive condition are chosen so as to optimise the amount and the direction of the force transmitted to the rim 50, in order to induce the swerving of the wheel R.

As mentioned previously, the device 40 is activated during a frontal collision with the obstacle 51 with a so-called small overlap between the motor vehicle 1 and the obstacle 51. In fact, the obstacle 51 or a deformed side portion of the front bumper (not illustrated) exerts a pushing force, substantially parallel to the direction D, against the front contact area 76. Said pushing force is such as to cause the immediate release of the bracket 58 and, thus, of the arm 43 by the retaining member 63, to make the arm 43 rotate about the axis 45. With reference to Figure 7, the form and the dimensions of the arm 43 are such to bring the end 47 into contact first with an intermediate portion 79 of the tread along the direction F, to cause the piercing of the tyre 49, and then against an intermediate area 80 of the rim 50 along the direction F', to cause the wheel R to swerve so that it is placed transversely to the directions A and D.

Thanks to the curved shape of the arm 43 and to the position of the rotation axis 45, the device 40 is also effective when the wheel R is arranged, along the direction D, in a position that is relatively far from the bumper, for example in front-wheel drive vehicles with a transverse engine.

On one hand, in the inactive position, the front contact area 76 is relatively close to the bumper, so the device 40 responds relatively quickly; on the other hand, even though the front contact area 76 is relatively far from the wheel R, the end 47 can still come into contact with the tread of the tyre 49 to start changing the direction of the wheel R. In particular, a relatively small angle of rotation about the axis 45 is sufficient to move the end 47 to act on the wheel R.

The speed of response and thus the effectiveness of the device 40 is further enhanced by the fact that the rotation about the axis 45 is due to a cylindrical hinge 52 and not a virtual hinge defined by a plastic deformation of a component. In other words, after being released by the retaining member 63, the arm 43 rotates substantially freely towards the wheel R, without any resisting forces opposing the longitudinal thrust exerted by the obstacle 51 (with a virtual hinge, instead, the rotation would be opposed or attenuated by the plastic deformation energy of said virtual hinge).

The specific characteristics as regards the shape and arrangement of the arm 43 enable the achievement of an optimal solution.

Moreover, the device 40 is relatively simple to produce and assemble, and does not alter the structural features of the frame structure 2, apart from the holes that must be formed in the portion 41 for the bushes 55 and 72. In other words, by making slight changes, the safety device 40 can be added to the normal front frame structures of the known motor vehicles currently on the market.

To conclude, it is clear that the safety device 40 is extremely simple and effective, compared to the known solutions, and is thus able to guarantee a high level of safety under all conditions and for any configuration of the engine compartment 3.

Lastly, from the above description it is clear that modifications and variations may be made to the motor vehicle 1 described above and illustrated in the accompanying Figures without departing from the scope of the present invention as set forth in the appended claims.

In particular, the cross section of the arm 43 and/or the method of connection to the portion 41 could differ from those illustrated and described by way of preferred example. Moreover, the arm 43 could have a different, or even a more complex, shape and/or structure from that illustrated and described by way of preferred example, but which are still suitable to obtain an action on the wheel R even when the front contact area 76 is relatively far from the wheel R.

## Claims

1. Motor vehicle (1) comprising:
- two front wheels (R);
- a front frame structure (2) comprising a pair of struts (22) which are mutually symmetrical with respect to an ideal vertical centreline plane;
- a safety device (40) to turn at least one wheel (R), which is one of said front wheels, transversely to a travel direction (A) during a frontal collision with an obstacle (51); said safety device (40) being borne by an intermediate portion (41) of one of said struts (22) and comprising an arm (43), which protrudes laterally outwards from said intermediate portion (41) and is able to rotate about a rotation axis (45) with respect to said intermediate portion (41) between:
a) an inactive position, in which said arm (43) has a free end (47) arranged in a position that is aligned with and spaced from said wheel (R) along a longitudinal direction (D) parallel to said travel direction (A); and
b) an active position, in which said free end (47) comes into contact with said wheel (R) along a direction (F) that is inclined with respect to said longitudinal direction (D) in order to cause a swerving of the wheel (R);
**characterised in that**, in the inactive position, said rotation axis (45) is arranged longitudinally between said free end (47) and said wheel (R).

2. Motor vehicle as claimed in claim 1, **characterised in that** said arm (43) has a front contact area (76) which, in the inactive position:
- is the area arranged longitudinally further forward than the other portions of said safety device (40);
- in the horizontal direction orthogonal to said longitudinal direction (D), it is arranged in an intermediate position between said free end (47) and said rotation axis (45).

3. Motor vehicle as claimed in claim 2, **characterised in that**, in the inactive position, said free end is arranged longitudinally between said rotation axis (45) and said front contact area (76).

4. Motor vehicle as claimed in claim 2 or 3, **characterised in that** said arm (43) has a curved axis (74) with the concavity facing said wheel (R) in the inactive position.

5. Motor vehicle as claimed in claim 4, **characterised in that** said arm (43) is defined by a box-shaped element.

6. Motor vehicle as claimed in claim 4 or 5, **characterised in that** said free end (47) is pointed.

7. Motor vehicle as claimed in any one of the preceding claims, **characterised in that** said arm (43) has a connection end (44), opposite to said free end (47) and coupled to said intermediate portion (41) by means of a cylindrical hinge (52).

8. Motor vehicle as claimed in claim 7, **characterised in that** said cylindrical hinge (52) comprises a hinge pin (53) defined by a first bolt.

9. Motor vehicle as claimed in claim 8, **characterised in that** said cylindrical hinge (52) comprises a bush (55) fixed to said intermediate portion (41), protrudes above and below said intermediate portion (41) and defines a hinge seat (56) coaxially engaged by said hinge pin (53).

10. Motor vehicle as claimed in any one of claims 7 to 9, **characterised in that** said safety device (40) comprises a retaining member (63) which exerts a retaining force to hold said arm (43) in the inactive position.

11. Motor vehicle as claimed in claim 10, **characterised in that** said retaining force is defined by a friction force.

12. Motor vehicle as claimed in claim 10 or 11, **characterised in that** said retaining member (63) is defined by a second bolt borne by said intermediate portion (41).

13. Motor vehicle as claimed in any one of the claims from 7 to 12, **characterised in that** said safety device (40) further comprises a bracket (58) which is fixed to said connection end (44) and is coupled to said cylindrical hinge (53).

14. Motor vehicle as claimed in claim 13, **characterised in that** said bracket (58) has a C-shaped cross section and houses said connection end (44).

15. Motor vehicle as claimed in claim 14, **characterised in that** said bracket (58) comprises two tongues (60) arranged above and, respectively, below said intermediate portion (41) and ending with respective rear portions (61) coupled to said cylindrical hinge (53).

## Patentansprüche

1. Kraftfahrzeug (1), umfassend:
- zwei Vorderräder (R);
- eine Vorderrahmenstruktur (2), die ein Paar Streben (22) umfasst, die bezogen auf eine ideale vertikale Mittellinienebene zueinander symmetrisch sind;
- eine Sicherheitsvorrichtung (40), um mindestens ein Rad (R), das eines der Vorderräder ist, während einer Frontalkollision mit einem Hindernis (51) quer zu einer Fahrtrichtung (A) zu drehen; wobei die Sicherheitsvorrichtung (40) von einem Zwischenabschnitt (41) einer der Streben (22) getragen wird und einen Arm (43) umfasst, der von dem Zwischenabschnitt (41) seitlich nach außen vorsteht und relativ zu dem Zwischenabschnitt (41) um eine Drehachse (45) drehbar ist zwischen:
a) einer Inaktivposition, in der ein freies Ende (47) des Arms (43) in einer Position angeordnet ist, die entlang einer Längsrichtung (D) parallel zu der Fahrtrichtung (A) mit dem Rad (R) ausgerichtet und von diesem beabstandet ist; und
b) einer Aktivposition, in der das freie Ende (47) mit dem Rad (R) entlang einer Richtung (F) in Kontakt kommt, die in Bezug auf die Längsrichtung (D) geneigt ist, um ein Ausweichen des Rades (R) zu bewirken;
**dadurch gekennzeichnet, dass** die Drehachse (45) in der Inaktivposition in Längsrichtung zwischen dem freien Ende (47) und dem Rad (R) angeordnet ist.

2. Kraftfahrzeug nach Anspruch 1, **dadurch gekennzeichnet, dass** der Arm (43) eine vordere Kontaktfläche (76) aufweist, die in der Inaktivposition:
- der Bereich ist, der in Längsrichtung weiter vorne angeordnet ist als die anderen Abschnitte der Sicherheitsvorrichtung (40);
- in Horizontalrichtung orthogonal zu der Längsrichtung (D) in einer Zwischenposition zwischen dem freien Ende (47) und der Drehachse (45) angeordnet ist.

3. Kraftfahrzeug nach Anspruch 2, **dadurch gekennzeichnet, dass** das freie Ende in der Inaktivposition in Längsrichtung zwischen der Drehachse (45) und der vorderen Kontaktfläche (76) angeordnet ist.

4. Kraftfahrzeug nach Anspruch 2 oder 3, **dadurch gekennzeichnet, dass** der Arm (43) eine gekrümmte Achse (74) aufweist, wobei in der Inaktivposition die Konkavität dem Rad (R) zugewandt ist.

5. Kraftfahrzeug nach Anspruch 4, **dadurch gekennzeichnet, dass** der Arm (43) durch ein kastenförmiges Element gebildet ist.

6. Kraftfahrzeug nach Anspruch 4 oder 5, **dadurch gekennzeichnet, dass** das freie Ende (47) spitz ist.

7. Kraftfahrzeug nach einem der vorhergehenden Ansprüche, **dadurch gekennzeichnet, dass** der Arm (43) ein dem freien Ende (47) gegenüberliegendes Anschlussende (44) aufweist, das mittels eines zylindrischen Scharniers (52) an dem Zwischenabschnitt (41) angelenkt ist.

8. Kraftfahrzeug nach Anspruch 7, **dadurch gekennzeichnet, dass** das zylindrische Scharnier (52) einen Scharnierstift (53) umfasst, der durch einen ersten Bolzen gebildet ist.

9. Kraftfahrzeug nach Anspruch 8, **dadurch gekennzeichnet, dass** das zylindrische Scharnier (52) eine Buchse (55) umfasst, die an dem Zwischenabschnitt (41) befestigt ist, den Zwischenabschnitt (41) nach oben und unten überragt und einen Scharniersitz (56) bildet, in den der Scharnierstift (53) koaxial eingreift.

10. Kraftfahrzeug nach einem der Ansprüche 7 bis 9, **dadurch gekennzeichnet, dass** die Sicherheitsvorrichtung (40) ein Halteelement (63) umfasst, das eine Haltekraft ausübt, um den Arm (43) in der Inaktivposition zu halten.

11. Kraftfahrzeug nach Anspruch 10, **dadurch gekennzeichnet, dass** die Haltekraft durch eine Reibungskraft gebildet ist.

12. Kraftfahrzeug nach Anspruch 10 oder 11, **dadurch gekennzeichnet, dass** das Halteelement (63) durch einen zweiten Bolzen gebildet ist, der von dem Zwischenabschnitt (41) getragen wird.

13. Kraftfahrzeug nach einem der Ansprüche 7 bis 12, **dadurch gekennzeichnet, dass** die Sicherheitsvorrichtung (40) ferner eine Halterung (58) umfasst, die an dem Anschlussende (44) befestigt und mit dem zylindrischen Scharnier (53) gekoppelt ist.

14. Kraftfahrzeug nach Anspruch 13, **dadurch gekennzeichnet, dass** die Halterung (58) einen C-förmigen Querschnitt aufweist und das Anschlussende (44) aufnimmt.

15. Kraftfahrzeug nach Anspruch 14, **dadurch gekennzeichnet, dass** die Halterung (58) zwei Zungen (60) umfasst, die über bzw. unter dem Zwischenabschnitt (41) angeordnet sind und mit jeweiligen hinteren Abschnitten (61) enden, die mit dem zylindrischen Scharnier (53) gekoppelt sind.

## Revendications

1. Véhicule à moteur (1) comprenant :
deux roues avant (R) ;
une structure de bâti avant (2) comprenant une paire d'entretoises (22) qui sont mutuellement symétriques par rapport à un plan central vertical idéal ;
un dispositif de sécurité (40) pour faire tourner au moins une roue (R), qui est l'une desdites roues avant, transversalement par rapport à une direction de déplacement (A) pendant une collision frontale avec un obstacle (51) ; ledit dispositif de sécurité (40) étant porté par une partie intermédiaire (41) de l'une desdites entretoises (22) et comprenant un bras (43) qui fait saillie latéralement vers l'extérieur à partir de ladite partie intermédiaire (41) et peut tourner autour d'un axe de rotation (45) par rapport à ladite partie intermédiaire (41) entre :
a) une position inactive dans laquelle ledit bras (43) a une extrémité libre (47) agencée dans une position qui est alignée avec et espacée de ladite roue (R) le long d'une direction longitudinale (D) parallèle à ladite direction de déplacement (A) ; et
b) une position active dans laquelle ladite extrémité libre (47) vient en contact avec ladite roue (R) le long d'une direction (F) qui est inclinée par rapport à ladite direction longitudinale (D) afin de provoquer un dérapage de la roue (R) ;
**caractérisé en ce que**, dans la position inactive, ledit axe de rotation (45) est agencé longitudinalement entre ladite extrémité libre (47) et ladite roue (R).

2. Véhicule à moteur selon la revendication 1, **caractérisé en ce que** ledit bras (43) a une zone de contact avant (76) qui, dans la position inactive :
est la zone agencée longitudinalement plus loin vers l'avant que les autres parties dudit dispositif de sécurité (40) ;
dans la direction horizontale orthogonale par rapport à ladite direction longitudinale (D), elle est agencée dans une position intermédiaire entre ladite extrémité libre (47) et ledit axe de rotation (45).

3. Véhicule à moteur selon la revendication 2, **caractérisé en ce que**, dans la position inactive, ladite extrémité libre est agencée longitudinalement entre ledit axe de rotation (45) et ladite zone de contact avant (76).

4. Véhicule à moteur selon la revendication 2 ou 3, **caractérisé en ce que** ledit bras (43) a un axe incurvé (74) avec la concavité orientée vers ladite roue (R) dans la position inactive.

5. Véhicule à moteur selon la revendication 4, **caractérisé en ce que** ledit bras (43) est défini par un élément en forme de boîte.

6. Véhicule à moteur selon la revendication 4 ou 5, **caractérisé en ce que** ladite extrémité libre (47) est pointue.

7. Véhicule à moteur selon l'une quelconque des revendications précédentes, **caractérisé en ce que** ledit bras (43) a une extrémité de raccordement (44), opposée à ladite extrémité libre (47) et couplée à ladite partie intermédiaire (41) au moyen d'une charnière cylindrique (52).

8. Véhicule à moteur selon la revendication 7, **caractérisé en ce que** ladite charnière cylindrique (52) comprend une broche de charnière (53) définie par un premier boulon.

9. Véhicule à moteur selon la revendication 8, **caractérisé en ce que** ladite charnière cylindrique (52) comprend une douille (55) fixée sur ladite partie intermédiaire (41), fait saillie au-dessus et au-dessous de ladite partie intermédiaire (41) et définit un siège de charnière (56) mis en prise de manière coaxiale par ladite broche de charnière (53).

10. Véhicule à moteur selon l'une quelconque des revendications 7 à 9, **caractérisé en ce que** ledit dispositif de sécurité (40) comprend un élément de retenue (63) qui exerce une force de retenue pour maintenir ledit bras (43) dans la position inactive.

11. Véhicule à moteur selon la revendication 10, **caractérisé en ce que** ladite force de retenue est définie par une force de friction.

12. Véhicule à moteur selon la revendication 10 ou 11 **caractérisé en ce que** ledit élément de retenue (63) est défini par un second boulon porté par ladite partie intermédiaire (41).

13. Véhicule à moteur selon l'une quelconque des revendications 7 à 12, **caractérisé en ce que** ledit dispositif de sécurité (40) comprend en outre un support (58) qui est fixé à ladite extrémité de raccordement (44) et est couplé à ladite charnière cylindrique (53).

14. Véhicule à moteur selon la revendication 13, **caractérisé en ce que** ledit support (58) a une section transversale en forme de C et loge ladite extrémité de raccordement (44).

15. Véhicule à moteur selon la revendication 14, **caractérisé en ce que** ledit support (58) comprend deux languettes (60) agencées au-dessus et respectivement au-dessous de ladite partie intermédiaire (41) et se terminant avec des parties arrière (61) respectives couplées à ladite charnière cylindrique (53).
